# EUROPEAN PATENT APPLICATION

(11) **EP 1 713 242 A1**
(43) Date of publication of application: **18.10.2006**
(21) Application number: 05290808.4
(22) Date of filing: 12.04.2005
(51) Int. Cl.: H04M 3/436

(54) **Method of establishing a communication connection**

(71) Applicant: ALCATEL, 75008 Paris (FR)
(72) Inventor: Moitier, Plerrick, 29200 Brest (FR); Bonnaud, Fabrice, 29260 Le Folgoet (FR); Rey, Jean-François, 29200 Brest (FR)
(74) Representative: LOUIS, PÖHLAU, LOHRENTZ

(57) **Abstract**

The invention concerns a method and a system for providing a called party with information about an intended telecommunication. During dialling a telephone number of the called party, a calling party speaks a message intended for the called party into the microphone of a first telephone set (1, 2, 201, 202, 301, 302). The call is signalled to the called party. When the called party picks up the handset of his telephone set (1, 2, 201, 202, 301, 302), the recorded message is re-played to the called party. The called party uses the message for his decision whether to accept the waiting call. In case he accepts, a telephone connection between the calling party and the called party is established.

## Description

The invention relates to a method of establishing a communication connection through a telecommunication network, in particular a method of establishing a communication connection after providing a called party with information about an intended communication connection.

US 4 582 956 describes a method of displaying special service information like, e.g., the directory number of a calling station, personal messages, and other information, at a called telephone station. This is made possible by sending, in addition to transmitting the ringing signals, an unmodulated signal and by a modulated signal during the silent interval between ringing signals. The modulated signal represents the special service information. The described feature is known as CLIP (= Calling party Line Identity Presentation) in case the called party can see a calling party line ID - usually the calling party's directory number - at their display telephone. If the correlation between the calling party's name and the calling party ID has been provided, even the calling party's name can be displayed instead or in addition to the calling party ID. This might be very convenient for the called party since a name is easier remembered than a telephone number.

Some telephone systems, e.g., in schools, public buildings, companies, etc. provide the ability to call for assistance in case of an urgent situation. Any telephone in such a system has the ability to place an urgent call internally. This call will ring a selected group of display phones and display the priority level and extension number of the phone initiating the urgent call.

Often, the display of names, telephone numbers, and priorities is not explicit enough if the called party has to decide whether to accept or reject the call. The called party may want to know the subject of a call before he decides to accept or reject the call. Entering via the telephone keypad a personal message to be displayed at the called telephone is cumbersome and - in most cases - technically not implemented. Alternatively, a calling party may send an instant message (= IM), voice or text, to inform the called party about the subject of the call. However, this information is not provided simultaneously to the ringing of the telephone but usually some time before. Thus, the message with the subject of the call is not easily correlated with an individual call. Another calling party may happen to call at about the same time and the called party mistakenly assumes the incoming call is from the calling party he received the IM from. Moreover, the called party has to consult his mailbox.

It is the object of the present invention to improve the establishment of a communication connection.

The object of the present invention is achieved by a method of establishing a communication connection between a calling party and a called party through a telecommunication network, wherein the method comprises the steps of receiving, at a telecommunication terminal of the calling party, a message comprising information about the intended communication connection or a selection command for such message from the calling party; initiating by the telecommunication terminal of the calling party a telecommunication call to a telecommunication terminal of the called party; transmitting the received message or a message selected by the selection command as announcement message through the telecommunication network to the telecommunication terminal of the called party; signalling the telecommunication call at the telecommunication terminal of the called party; playing the announcement message at the telecommunication terminal of the called party before establishing the communication connection; and establishing the communication connection between the telecommunication terminal of the calling party and the telecommunication terminal of the called party if the called party accepts the telecommunication call based on the announcement message. The object of the present invention is further achieved by a telecommunication terminal assigned to a subscriber of a telecommunication network, the telecommunication terminal comprising a control unit for establishing communication connections through the telecommunication network, whereby the control unit is adapted for receiving a message comprising information about an intended communication connection or a selection command for such message from the subscriber; initiating a telecommunication call to a telecommunication terminal of a called party; sending the received message or a message selected by the selection command as announcement message through the telecommunication network to the telecommunication terminal of the called party; signalling a call request received from a telecommunication terminal of a calling party to the subscriber; playing an announcement message associated with the call request to the subscriber before establishment of the communication connection; detecting whether the subscriber accepts the telecommunication call based on the announcement message and triggering the establishment of the communication connection between the telecommunication terminal of the subscriber and the telecommunication terminal of the called party. And the object of the present invention is further achieved by a call control server for establishing a communication connection between a calling party and a called party through a telecommunication network, whereby the call control server is adapted for receiving a message comprising information about the intended communication connection or a selection command for such message from the calling party; forwarding a telecommunication call initiated by a telecommunication terminal of the calling party to a telecommunication terminal of the called party; transmitting the received message or a message selected by the selection command as announcement message through the telecommunication network to the telecommunication terminal of the called party; triggering the signalling of the telecommunication call at the telecommunication terminal of the called party; triggering the playing of the announcement message at the telecommunication terminal of the called party before establishing the communication connection; and establishing the communication connection between the telecommunication terminal of the calling party and the telecommunication terminal of the called party if the called party accepts the telecommunication call based on the announcement message.

Thereby it is possible that the control unit of the telecommunication terminal is adapted for signalling, to the called party, the availability of an announcement message associated with the call request, receiving in response to said signalling a feedback message from the called party, said feedback message indicating to the control unit that the called party wishes to accept the announcement message or skip the announcement message, and playing the announcement message if the feedback message is affirmative or skipping the announcement message if the feedback message is declining.

Similarly, it is possible that the call control server is adapted for triggering the signalling, to the called party, the availability of an announcement message associated with the call request, receiving in response to said signalling a feedback message from the called party, said feedback message indicating to the call control server that the called party wishes to accept the announcement message or skip the announcement message, and triggering the playing of the announcement message if the feedback message is affirmative or triggering the skipping of the announcement message if the feedback message is declining.

The invention improves the efficiency of telephone calls. Incoming calls can be classified with respect to arbitrary information supplied by the calling party in form of a message. Usually the message will contain the subject of the intended telecommunication, preferably as voice message.

Unwanted telephone calls can be identified and denied without blocking the telephone line. Therefore, the telephone line remains free for important calls. The input of a personal message like a subject of a call by voice is easy, authoritative and more natural than editing a written text via a keypad.

Further advantages are achieved by the embodiments of the invention indicated by the dependent claims.

According to a preferred embodiment of the invention, the message is implemented into a SIP command starting the set-up of a SIP communication connection (SIP = Session Initiation Protocol). An INVITE message sent by a SIP User Agent (= UA) of a calling party for initiating a communication connection has a multi-part MIME body with the usual SDP part (MIME = Multipurpose Internet Mail Extension; SDP = Session Description Protocol). In a preferred embodiment, the message is inserted into the multi-part MIME body of the SIP INVITE message. Then the multi-part MIME body contains the SDP part and the message in another part. The call which invites the called party to accept the intended communication connection and the message are then transmitted together, i.e., as one data entity, to the called party. Therefore, the called party SIP User Agent is supplied with the data necessary for playing the message to the called party, preferably during signalling the incoming call.

If the message is transported within the call signalling message, there may be performance issues in the network. To solve this, it is further possible that the message is deposited in a memory and only a reference to the deposited message is transported in the call signalling message. Therefore, the data size of the signalling message is reduced. This may be particularly important if the message comprises video content or other data content with a large data volume. Due to the "normal" data size of the call signalling message, the transmission of the signalling data over the telecommunication network is less likely to pose any problems. The deposited message is only extracted from the memory and transmitted over the telecommunication network when the called party responds to the signalling of the call and decides to accept the call announcement.

The message of the calling party may contain any arbitrary information intended for the called party like, e.g., the calling party's name or the time of day the call is made. According to a preferred embodiment of the invention, the message comprises information about the intended telecommunication call, in particular the subject of the intended telecommunication call. Thus, the called party is provided with elementary information for the decision whether to accept a waiting call.

In a preferred embodiment, the message will be a voice message. The calling party speaks the voice message during inputting the address of the telecommunication terminal of the called party, e.g., during dialling the telephone number of the called party. The voice message is recorded by the telecommunication terminal of the calling party or another device, e.g., a central device for call control in the telecommunication network. It is also possible that the voice message is converted into a suitable data format for transmission and/or storage of the message.

It is also possible that the message contains voice content and video content or that the message contains only video content. The video content may be stored on the telecommunication terminal or on a storage device other than the telecommunication terminal and integrated into the message by the telecommunication terminal, if the telecommunication terminal has the capability. Then the video may be played at a display of the telecommunication terminal of the called party before the establishment of the communication connection.

Some advantages are achieved if data about the calling party and/or the priority of the telecommunication, e.g., the calling party's telephone number, is not presented by means of, e.g., CLIP to the called party but is integrated into the message. In case the message is a voice message, the data about the calling party and/or the priority of the telecommunication may be converted from text to voice by a text-to-speech synthesiser and attached to the message.

According to a preferred embodiment of the invention, the telecommunication terminals are IP devices (IP = Internet Protocol). The implementation of the message into the VolP signaling messages is greatly simplified, and the procedure according to the invention may be facilitated, e.g., the beginning and the end of the recording can easily be indicated by pressing a button on the IP devices.

These as well as further features and advantages of the invention will be better appreciated by reading the following detailed description of presently preferred exemplary embodiments taken in conjunction with accompanying drawings of which:
- Fig. 1: is a block diagram of a system according to a first embodiment of the invention.
- Fig. 2: is a block diagram of a system according to a further embodiment of the invention.
- Fig. 3: is a operational flow diagram of the system according to the embodiment of the invention described in Fig. 2.
- Fig. 4: is a block diagram of a system according to a further embodiment of the invention.

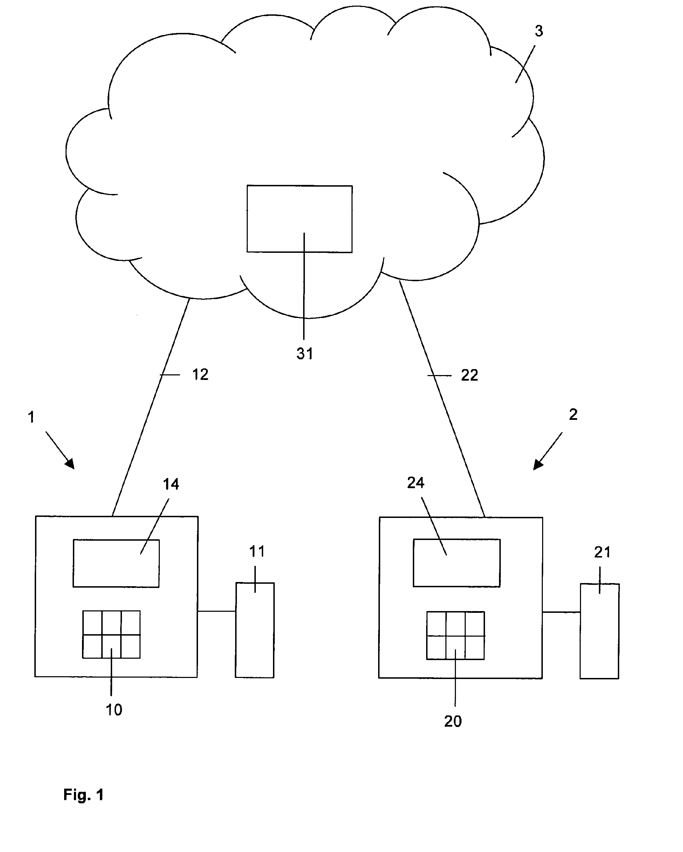

Figure 1 shows a telecommunication system where a first telecommunication terminal 1 is used for communication with a second telecommunication terminal 2 through a telecommunication network 3. Each of the telecommunication terminals 1, 2 comprises input and output means 10, 11, 20, 21 and a control unit 14, 24. In case the telecommunication terminals 1, 2 are telephone sets, the input and output means may be, e.g., a handset 11, 21 with a loudspeaker and a microphone, and a keypad 10, 20 with buttons for input to the telephone sets 1, 2. The telecommunication terminals 1, 2 are connected with wire-line or wireless connections 12, 22 to the network 3. The network 3 comprises an exchange 31.

The telecommunication network 3 is a telecommunication network capable to enable a synchronous or asynchronous communication between the telecommunication terminals 1, 2. Preferably the telecommunication network 3 is a fixed wire-line network, e.g., a PSTN network or an ISDN network with an exchange 31 (PSTN = Public Switched Telephone Network; ISDN = Integrated Services Digital Network). Alternatively, the telecommunication network 3 is a mobile telecommunication or cellular phone network, for example according to the GSM or UMTS standard (GSM = Global System for Mobile Communications; UMTS = Universal Mobile Telecommunications System). According to a further embodiment, the telecommunication network 3 is a data network, preferably an IP network where a communication session between communication partners is initiated using the SIP protocol. Such network may be composed of various physical sub-networks, for example ATM networks and wireless access networks interlinked via a common level three IP communication layer (ATM = Asynchronous Transfer Mode).

The exchange 31 establishes, on demand, an individual connection from a calling party to a called party for as long as is required for the transfer of information. It switches and relays an incoming call to an addressed outlet of the called party and establishing an connection between the telecommunication terminals 1 ,2.

The telecommunication terminals 1, 2 may be POTS telephone sets and ISDN phones, respectively, wired with a circuit-switched telecommunication network 3, mobile phones logged in a radio access telecommunication network 3, or VolP hardphones and/or VoIP softphones connected to a packet-switched network 3 (POTS = Plain Old Telephone System; VolP = Voice over Internet Protocol). The terminals 1, 2 are composed of an electronic circuit having at least one microprocessor, application programs executed by the at least one microprocessor, and a control unit 14, 24. The functionalities of the terminals 1, 2 are performed by the interaction of these hardware and software components.

Each of the control units 14, 24 are composed of a hardware platform, a software platform basing on the hardware platform and several application programs executed by the system platform formed by the software and hardware platform. The functionality of the control units 14, 24 is provided by the execution of these application programs. The application programs or a selected part of these application programs constitute a computer software product providing a call control service as described in the following, when executed on the system platform. Further, such computer software product is constituted by a storage medium storing these application programs or said selected part of application programs.

Each of the control units 14, 24 is adapted to control and provide the communication service according to the invention. It is possible that the control unit 14, 24 co-operates with a memory of the telecommunication terminal 1, 2 or that it comprises a dedicated memory of its own. Each of the control units 14, 24 is adapted to co-operate with a control unit of another telecommunication terminal in order to provide the communication related service according to the invention. The operational logic is comprised within the control unit 14, 24, the storing of a message is provided by a memory under control of the control unit 14, 24. It is also possible that the control units 14, 24 only fulfil a part of the tasks needed for the service according to the invention, and that the remaining tasks are fulfilled by other devices, preferably by a central device installed in the network 3.

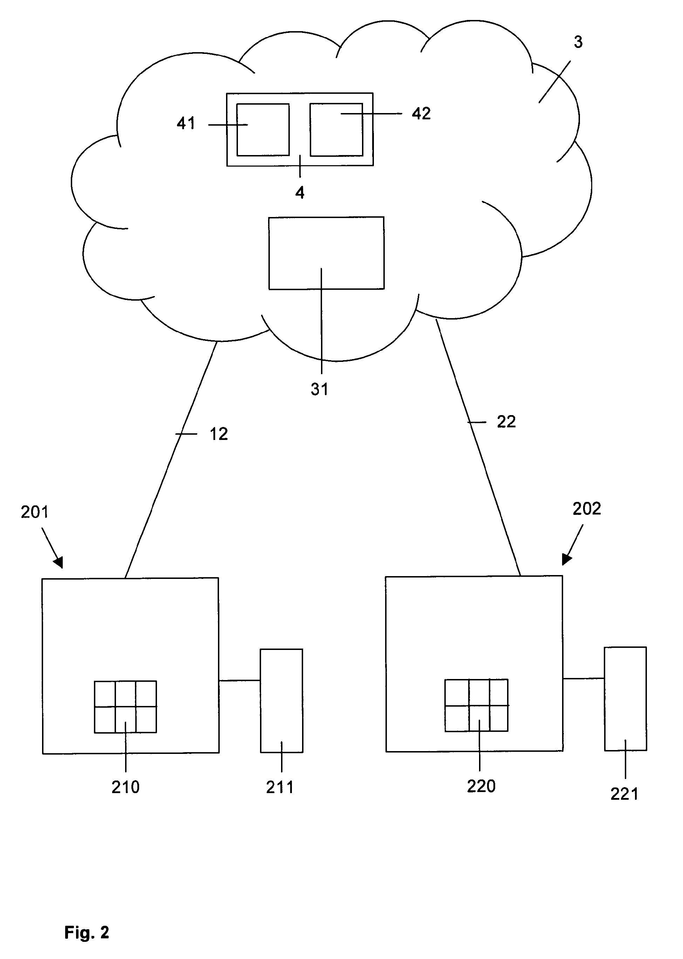

Figure 2 shows a telecommunication system similar to the one described in Fig. 1. It shows a telecommunication system where a first telecommunication terminal 201 is used for communication with a second telecommunication terminal 202 through a telecommunication network 3. Each of the telecommunication terminals 201, 202 comprises input and output means 210, 211, 220, 221. In case the telecommunication terminals 201, 202 are telephone sets, the input and output means may be, e.g., a handset 211, 221 with a loudspeaker and a microphone, and a keypad 210, 220 with buttons for input to the telephone sets 201, 202. The telecommunication terminals 201, 202 are connected with wire-line or wireless connections 12, 22 to the network 3. The network 3 comprises an exchange 31.

The difference to the system described in Fig. 1 is that the telecommunication terminals 201, 202 of Fig. 2 do not comprise separate integral control units but that the functionalities of the local control units described with Fig. 1 are provided by a call control server 4 installed as a central control server in the network 3.

The call control server 4 is composed of one or several interlinked computers, i.e., a hardware platform, a software platform basing on the hardware platform and several application programs executed by the system platform formed by the software and hardware platform. The functionalities of the server 4 are provided by the execution of these application programs. The application programs or a selected part of these application programs constitute a computer software product providing a call control service as described in the following, when executed on the system platform. Further, such computer software product is constituted by a storage medium storing these application programs or said selected part of application programs.

From a functional view, the call control server 4 comprises a control unit 41 and a storage unit 42. The call control server 4 is adapted to control and provide the communication service according to the invention. The operational logic is comprised within the control unit 41, the storing of a message is provided by a storage unit 42 under control of the control unit 41. According to the present example, the call control server 4 is a central device of the network 3 controlling the communication service of many users.

It is also possible that functional parts of the call control server 4 are distributed among the network 3 and the attached telecommunication terminals 201, 202, for example, that the control unit 41 is a central unit installed as a central control server in the network 3, while the storage unit 42 is represented by local individual units in each of the telecommuniation terminals 201, 202. It is further possible that the call control server 4 or functional parts of it are associated with the exchange 31 or located near the exchange 31.

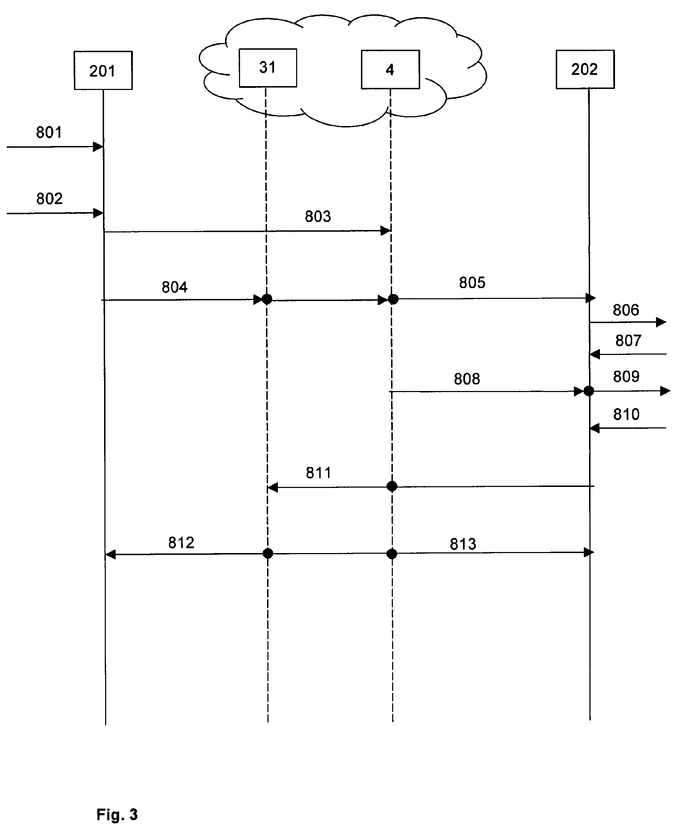

Figure 3 shows operational steps which are carried out to provide a communication service according to the embodiment of the invention described in Fig. 2. Fig. 3 shows a first and a second telecommunication terminal 201, 202, an exchange 31 and a call control server 4 in accordance with the embodiment described in Fig. 2.

A calling party who uses the first telephone set 201 wishes to communicate with a called party who uses the second telephone set 202. The calling party hooks off the handset 211 of the first telephone set 201 and, in a first step 801, dials a telephone number assigned to the second telephone set 202.

In a second step 802, before and/or during and/or after dialling the telephone number of the called party, the calling party speaks a voice message intended for the called party into the microphone of his telephone set 201.

The calling party may indicate the beginning and the end of the spoken message to the telephone set 201 by pressing a button on the keypad 210 of the telephone set 201. This is preferably a DTMF signal, which is pressed to signal the start/end of an utterance (DTMF = Dual Tone Multiplexed Frequency). The signal between the two tones will be processed as the voice message to be transmitted to the called party. It is also possible that the calling party is able to listen again to a recorded voice message and edit or delete the message if the calling party is not content with the state of the message.

It is also possible that the recording of the voice message begins automatically after the telecommunication terminal 201 or the call control server 4 recognizes the dialling 801 of a correct number. Or it is possible that the recording is triggered by a keyword spoken into the microphone of the terminal 201, and ended by another keyword. Alternatively, it is possible that the calling party signals that he wishes to record a message to the called party by pressing a button right after lifting the handset 211, that he speaks the message while dialling 801 - number by number or by pressing a button for dialling a prestored telephone number- and that the recording is stopped by pressing a button again. Moreover, if a push button is absent in the case of legacy phones, VAD may be used to detect the beginning and the end of the speech by a defined silent pre- and hangover time (VAD = Voice Activity Detection).

It is further possible that a message with voice and/or video content has been prepared in advance and that the calling party indicates to the telecommunication terminal 201 where the message is located. Then the telecommunication terminal 201 is adapted, e.g., by means of suitable software, to access the prepared message for further processing.

In a third step 803, the message is transferred to the call control server 4 where the message is stored in the storage unit 41 for later replay. The storage unit 41 and/or the call control server 4 may be represented as a central device deployed in the network 3, according to the embodiment shown in Fig. 2, or the storage unit 41 and/or the call control server 4 may be located in the first telephone set 201, according to the embodiment shown in Fig. 1.

In a next step 804, a call is initiated by the dialling 801 and the call is switched and routed by the exchange 31 to the call control server 4. From there, the call is forwarded by the call control server 4 to the second telephone set 202, shown in Fig. 3 as step 805. It is possible that the exchange 31 co-operates with the call control server 4 to initiate the call. The call is signalled at the second telephone set 202, e.g., by ringing 806. In step 807, the called party picks up the handset 221 of his telephone set 202.

The picking up of the handset, i.e., the step 807 may be watched by the call control server 4. When the call control server 4 notices that the called party picks up the handset, it triggers the following step 808 where the recorded message is transmitted from the call control server 4 to the telephone set 202. Similarly, the control unit 41 managing the described method may be triggered by the hook-off of the second telephone 202 to start the transmission 808 of the message. It is possible that the called party receives a signal triggered by the call control server 4 or the control unit 41 indicating to him that an announcement message is available.

If the called party decides to accept said announcement message, the called party can indicate to the call control server 4 or the control unit 41, e.g., by pushing a first button or by speaking a keyword, that he wishes to accept the announcment message. It is also possible that the called party decides to skip the announcement message and that he has the possibility to indicate the decision to skip the call announcement by some appropriate action, e.g., by pushing a second button or by speaking a keyword. It is also possible that the called party first must push a button on the keypad 220 of his phone 202 to hear the announcement message. In this case, the pressing of the button may trigger the control unit 41 to transmit the recorded message. Thus in case the called party accepts the announcement message, immediately or after some - possibly predefined - period of time, the recorded message is played by the telecommunication terminal 202 of the called party, and the called party hears the message which has been forwarded in step 809 to the loudspeaker of the second telephone set 202.

After listening to the recorded message or after having skipped the announcement message, the called party may wish to receive the waiting call. This acceptance 810 may be signalled by pressing a pre-defined button on the keypad 220 of the telephone set 202 or by speaking a keyword. It is also possible that the system recognises that the called party wishes to accept the call if the called party holds the line and does not hook on the phone 202 after listening and/or seeing the message. For example, if the called party does not hook on the phone 202 within a pre-defined time slot after the end of the message, the call is put through automatically without the need of any active command by the called party. It is possible that the waiting call is put through automatically, without any delay and without the need of any further action by the called party, if the called party has skipped the announcement message.

The - active or passive - acceptance signal 810 triggers in step 811 the exchange 31 and/or the call control server 4 to establish the connection between the calling party and the called party. It is also possible that the acceptance signal is transmitted to the call control server 4 where it is processed, and that the call control server 4 triggers the exchange 31 to establish the connection. As last steps 812 and 813, the exchange 31 puts through the connection between the two involved telecommunication terminals 201, 202 and the two telecommunication partners can communicate. It is possible that the exchange 31 co-operates with the call control server 4 to establish the communication connection.

If the called party is not inclined to accept the waiting call after listening to the re-play 809 of the voice message from the calling party, it is possible that the called party hooks on the handset 221 or that he presses a specific button to indicate that he declines the call. Then no communication connection is set up between the calling party and the called party. Nevertheless, other usual incoming call features like, e.g., call forwarding, voice mail, etc. may still be available.

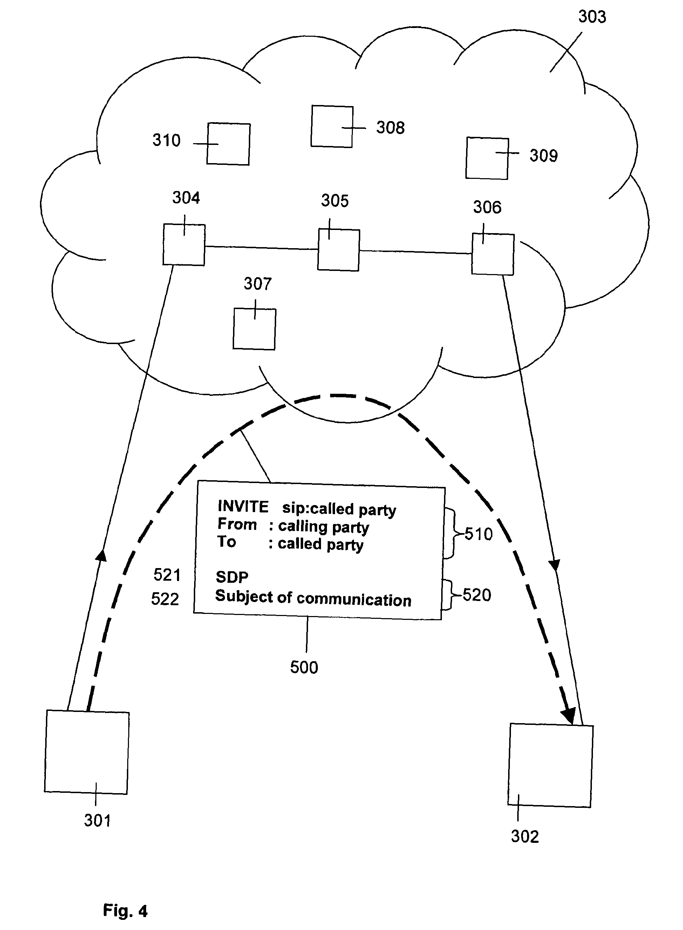

Figure 4 shows an embodiment of the invention within an IP network 303 using SIP. The telecommunication terminals 301, 302 are represented as SIP UAs: the telecommunication terminal 301 of the calling party is a SIP User Agent Client (= UAC), the telecommunication terminal 302 of the called party is a SIP User Agent Server (= UAS). The IP network 303 comprises several SIP proxy servers 304, 305, 306, a SIP registrar 307, a SIP redirect server 308, a location service 309, and a call control server 310. The main function of the devices comprised in the IP network 303 or some of their main functions are descibed below.

The SIP User Agents 301, 302 may be, e.g., PCs operating as softphones due to a dedicated VoIP telephony software. The proxy servers 304, 305, 306 as in most cases act as mediator that services the requests or forwards them to other UASs or UACs for servicing. The registrar 307 makes it possible for users to alter the address at which they are contactable. The redirect server 308 allows for redirection which enables users to temporarily change geographic location and still be contactable through the same SIP identity. The location service 309 supports comfortable addressing schemes, e.g., with names, usually in cooperation with the registrar 307 and with the help of DNS and other data bases (DNS = Domain Name Server).

In this embodiment of the invention, it is assumed that the functionality of the call control server according to the invention is provided by the call control server 310 working in accordance with the description to Figs. 2 and 3. But it is also possible that the communication service according to the invention is not provided by a dedicated device but is integrated into the SIP proxies 304, 305, 306.

To open a SIP session between the SIP UAC 301 and the SIP UAS 302, the SIP UAC 301 sends an INVITE request 500 to the SIP proxy 304. The INVITE request 500 comprises a header 510 which lists the SIP URI, i.e., the address of the SIP UAS 302, and the SIP URls and/or names of the sender and the recipient of the request 500 (URI = Universal Resource Identifier).

After inputting the SIP URI of the SIP UAS 302, the calling party may be asked by the SIP UAC 301 to speak a voice message. If the calling party confirms the option, e.g., by pressing a button, the calling party can press another button to signal the start of the voice message, speak his voice message, and press another button to signal the end of the voice message.

The SIP UAC 301 attaches the recorded voice message as a voice data file to the MIME body 520 of the SIP INVITE request 500 to be sent to the SIP UAS 302. The multi-part MIME body 520 comprises the usual SDP part 521 which serves to negotiate the transport protocols, codecs, etc. used for the transport of the data during the communication connection. It also comprises the voice message containing the subject of the communication message in another part 522.

The SIP proxy 304 tries to forward the INVITE request 500 to the SIP UAS 302 given as addressee of the INVITE request 500. The INVITE request 500 may take several hops to different SIP proxies 304, 305, 306 until it arrives at the SIP UAS 302 where the incoming call is signalled to the called party. The INVITE request 500 comprises all pieces of information needed by the SIP UAS 302 to respond to the sender 301.

The SIP UAS 302 receives the SIP INVITE message. Before a SIP OK confirmation is sent to the SIP UAC 301 to signalise that the SIP UAS 302 is ready to receive the call, the called party may hear/see the message 522. It is only after accepting the upcoming communication after hearing/seeing the message 522 by the called party that a SIP OK is re-sent to the SIP UAC 301 assigned to the calling party. After that the remaining conventional SIP messages are exchanged, and the communication can start.

## Claims

1. A method of establishing a communication connection between a calling party and a called party through a telecommunication network (3),
**characterised in**
**that** the method comprises the steps of:
receiving, at a telecommunication terminal (1, 2, 201, 202, 301, 302) of the calling party, a message comprising information about the intended communication connection or a selection command for such message from the calling party;
initiating by the telecommunication terminal (1, 2, 201, 202, 301, 302) of the calling party a telecommunication call to a telecommunication terminal (1, 2, 201, 202, 301, 302) of the called party;
transmitting the received message or a message selected by the selection command as announcement message through the telecommunication network (3) to the telecommunication terminal (1, 2, 201, 202, 301, 302) of the called party;
signalling the telecommunication call at the telecommunication terminal (1, 2, 201, 202, 301, 302) of the called party;
playing the announcement message at the telecommunication terminal (1, 2, 201, 202, 301, 302) of the called party before establishing the communication connection; and
establishing the communication connection between the telecommunication terminal (1, 2, 201, 202, 301, 302) of the calling party and the telecommunication terminal (1, 2, 201, 202, 301, 302) of the called party if the called party accepts the telecommunication call based on the announcement message.

2. The method of claim 1,
**characterised in**
**that** the method comprises the steps of:
inserting the announcement message into a SIP command initiating the set-up of a SIP communication connection;
transmitting the SIP command with the inserted announcement message through the telecommunication network (3) to the telecommunication terminal (1, 2, 201, 202, 301, 302) of the called party.

3. The method of claim 2,
**characterised in**
**that** the method comprises the step of:
transmitting the announcement message as part of a multi-part MIME body (520) of an INVITE message (500) sent by a SIP user agent (1, 2, 201, 202, 301, 302) of the calling party to a SIP user agent (1, 2, 201, 202, 301, 302) of the called party through the telecommunication network (3).

4. The method of claim 1,
**characterised in**
**that** the method comprises the steps of:
storing the announcement message in a storage unit (42);
transmitting a SIP message comprising a reference to the stored announcement message;
when signalling the telecommunication call with the SIP message at the telecommunication terminal (1, 2, 201, 202, 301, 302) of the called party, accessing the announcement message in the storage unit (42) based on the reference and transmitting the announcement message from the storage unit (42) through the telecommunication network (3) to the telecommunication terminal (1, 2, 201, 202, 301, 302) of the called party.

5. The method of claim 1,
**characterised in**
**that** the information about the intended communication connection comprises the subject of the intended communication call.

6. The method of claim 1,
**characterised in**
**that** the method comprises the step of:
recording the message as a voice message of the calling party in parallel to receiving the telecommunication address of the called party from the calling party.

7. The method of claim 1,
**characterised in**
**that** the message contains voice content and/or video content.

8. A telecommunication terminal (1, 2, 201, 202, 301, 302) assigned to a subscriber of a telecommunication network (3), the telecommunication terminal (1, 2, 201, 202, 301, 302) comprising a control unit (14, 24) for establishing communication connections through the telecommunication network (3),
**characterised in**
**that** the control unit (14, 24) is adapted for receiving a message comprising information about an intended communication connection or a selection command for such message from the subscriber; initiating a telecommunication call to a telecommunication terminal (1, 2, 201, 202, 301, 302) of a called party; sending the received message or a message selected by the selection command as announcement message through the telecommunication network (3) to the telecommunication terminal (1, 2, 201, 202, 301, 302) of the called party; signalling a call request received from a telecommunication terminal (1, 2, 201, 202, 301, 302) of a calling party to the subscriber; playing an announcement message associated with the call request to the subscriber before establishment of the communication connection; detecting whether the subscriber accepts the telecommunication call based on the announcement message and triggering the establishment of the communication connection between the telecommunication terminal (1, 2, 201, 202, 301, 302) of the subscriber and the telecommunication terminal (1, 2, 201, 202, 301, 302) of the called party.

9. The telecommunication terminal of claim 8,
**c h a r a c t e r i s e d in**
that the telecommunication terminal (1, 2, 201, 202, 301, 302) is an IP device.

10. A call control server (4) for establishing a communication connection between a calling party and a called party through a telecommunication network (3),
**characterised in**
**that** the call control server (4) is adapted for receiving a message comprising information about the intended communication connection or a selection command for such message from the calling party; forwarding a telecommunication call initiated by a telecommunication terminal (1, 2, 201, 202, 301, 302) of the calling party to a telecommunication terminal (1, 2, 201, 202, 301, 302) of the called party; transmitting the received message or a message selected by the selection command as announcement message through the telecommunication network (3) to the telecommunication terminal (1, 2, 201, 202, 301, 302) of the called party; triggering the signalling of the telecommunication call at the telecommunication terminal (1, 2, 201, 202, 301, 302) of the called party; triggering the playing of the announcement message at the telecommunication terminal (1, 2, 201, 202, 301, 302) of the called party before establishing the communication connection; and establishing the communication connection between the telecommunication terminal (1, 2, 201, 202, 301, 302) of the calling party and the telecommunication terminal (1, 2, 201, 202, 301, 302) of the called party if the called party accepts the telecommunication call based on the announcement message.
